**Europäisches Patentamt**

**European Patent Office**

**Office européen des brevets**

(19)

(11) Publication number: **0 116 738**

**A1**

(12) **EUROPEAN PATENT APPLICATION**

(21) Application number: **83303542.1**

(22) Date of filing: **20.06.83**

(51) Int. Cl.³: **F 16 K 1/32**

(30) Priority: **28.09.82 US 424891**
**17.03.83 US 476235**

(43) Date of publication of application:
**29.08.84 · Bulletin 84/35**

(84) Designated Contracting States:
**DE FR GB**

(71) Applicant: **KUNKLE VALVE COMPANY INC.**
**8222 Bluffton Road**
**Fort Wayne Indiana(US)**

(72) Inventor: **Howes, Franklin J.**
**5402 Radcliff Drive**
**Fort Wayne Indiana(US)**

(72) Inventor: **Ricker, Randall E.**
**Route 2 Box 237**
**Roanoke Indiana(US)**

(74) Representative: **Bayliss, Geoffrey Cyril et al,**
**BOULT, WADE & TENNANT 27 Furnival Street**
**London EC4A 1PQ(GB)**

(54) **Flexible guide member.**

(57) A flexible beam arrangement (35) functioning as a valve member guide in a pressure relief valve for maintaining proper alignment of a valve member (19,31) and a valve seat (21) is disclosed wherein one end of the flexible beam (35) is affixed to a valve housing (11,13) and the other end thereof is fixed to the valve member (37,39) so that opening and closing of the valve is associated with a flexing of the beam, however sliding motion of the valve member relative to the guide is eliminated. This assures an accurate reseating of the valve member on the valve seat. In the preferred form the flexible beam is formed as a relatively flat disc (35) with an outer peripheral portion being the one end that is fastened to the housing (11,13) and a central portion being the other end which is fastened to the valve member (37,39). Fastening of the other end to the valve member may be accomplished by a shoulder (40) and snap ring (46) arrangement so that the valve member may rotate about its axis relative to the disc, however, axial valve movement requires flexing of the disc. A plurality of volute or spiral slots (43,47,49) having a substantial angular extent may be provided in the disc or the disc (36) may be provided with a pair of nested oppositely facing C-shaped cutout sections (54,56) to aid flexure thereof so that on valve opening and closing the valve member moves axially.

FIG. I

FIG. 9

Croydon Printing Company Ltd.

# IMPROVED FLEXIBLE GUIDE

The present invention relates generally to valving arrangements and more particularly to guides for one valve member in such a valving arrangement. Even more particularly, the present invention relates to valve member guides in the environment of pressure relief valves.

Pressure relief valves are old and well-known and may, for example, be employed in steam boiler or compressed air arrangements as a safety device and have found a widespread use in the petrochemical industry. Such valves are typically spring loaded to a closed position and, when the pressure in a specified region of the valve exceeds some preselected value, the valve opens venting that excess pressure to the atmosphere or elsewhere to prevent harmful explosions or system damage.

One such safety or relief valve currently manufactured by the applicants assignee has a valve seat fixed within a valve housing and a moveable stem supported valve member which is spring biased toward that valve seat with the valve stem sliding in a guide member as the valve opens and closes. This valve stem guide is a comparatively expensive component of the valve requiring an accurate sliding fit with the valve stem. The accumulation of dirt, corrosion or other accumulation of material on the valve stem, sometimes prevents or impedes the opening of the valve when in fact the valve should open to relieve pressure within the system.

2

It would be highly desirable to eliminate this sliding motion between a valve stem and a valve guide while retaining the ability to reseat the valve member accurately on the valve seat without use of a sliding guide mechanism.

Among the several objects of the present invention may be noted the achieving of the above-noted desires; the provision of a valve member guide arrangement of reduced cost and enhanced reliability; the provision of a flexible beam valve member guide; and the provision of a valve member and guide arrangement which is free of any relative sliding motion. These, as well as other objects and advantageous features of the present invention, will be in part apparent and in part pointed out hereinafter.

In general, an improved valve member guide which is substantially friction free is formed as a circular flexible valve member guide having a central portion thereof captive between a pair of coaxial valve stem portions joined, for example, by threads, and a peripheral portion captive between engaged valve housing portions again, for example, threadedly joined. The valve member guide is typically formed of a relatively thin circular sheet of spring material having a plurality of volute or spiral slots separating similarly spiraling ribs. Thus, opening and closing of the valve is associated with flexure only of the beam like valve guide so that sliding motion of the valve stem relative to the guide is eliminated assuring accurate reseating of the valve member on a valve seat. In this configuration a point off the axis of the valve member executes a fixed trajectory each time the valve opens and closes insuring a good sealing closure of the valve as well as repeatability of valve action.

Also in general, an improved valve member guide which is substantially friction free is formed as a circular flexible valve member guide having a central portion thereof axially captive along a valve in a rotationally free manner and a peripheral portion captive between engaged valve housing portions. The valve member guide is typically formed of a relatively thin circular sheet of spring material having a somewhat cardioid shaped arm spanning the inner portion and connecting that inner portion to the outer portion so that one portion may flex readily relative to the other. Thus, opening and closing of the valve is associated with flexure only of the beam like valve guide so that sliding motion of the valve stem relative to the guide is eliminated assuring accurate reseating of the valve member on a valve seat. In this configuration the valve member executes a fixed trajectory each time the valve opens and closes insuring a good sealing closure of the valve as well as repeatability of valve action.

Figure 1 is a view in cross-section of a pressure relief valve including the flexible beam valve stem guide of the present invention in one form thereof;

Figure 2 is a plan view of a typical flexible beam of Figure 1;

Figure 3 is an exploded perspective view illustrating the valve stem, flexible beam and annular mounting ring of Figure 1;

Figure 4 is a cross-section of a valve similar to Figure 1 but illustrating a variation on the flexible beam valve stem guide;

Figure 5 is a cross-sectional view of a portion of the valve of Figure 4 illustrating the stem and beam configuration when the valve is open;

Figure 6 is an exploded perspective view of the pair of discs and separating sleeve of Figure 4;

Figure 7 is a view in cross-section of a pressure relief valve including the flexible beam valve stem guide of the present invention in another form thereof;

Figure 8 is a plan view of a typical flexible beam of Figure 7; and

Figure 9 is an exploded perspective view illustrating a portion of the valve stem, flexible beam and beam mounting sleeve and snap ring as employed in Figure 7 and further illustrating a variation on the flexible beam member.

Corresponding reference characters indicate corresponding parts throughout the several views of the drawing.

The exemplifications set out herein illustrate a preferred embodiment of the invention in one form thereof, and such exemplifications are not to be construed as limiting the scope of the disclosure or the scope of the invention in any manner.

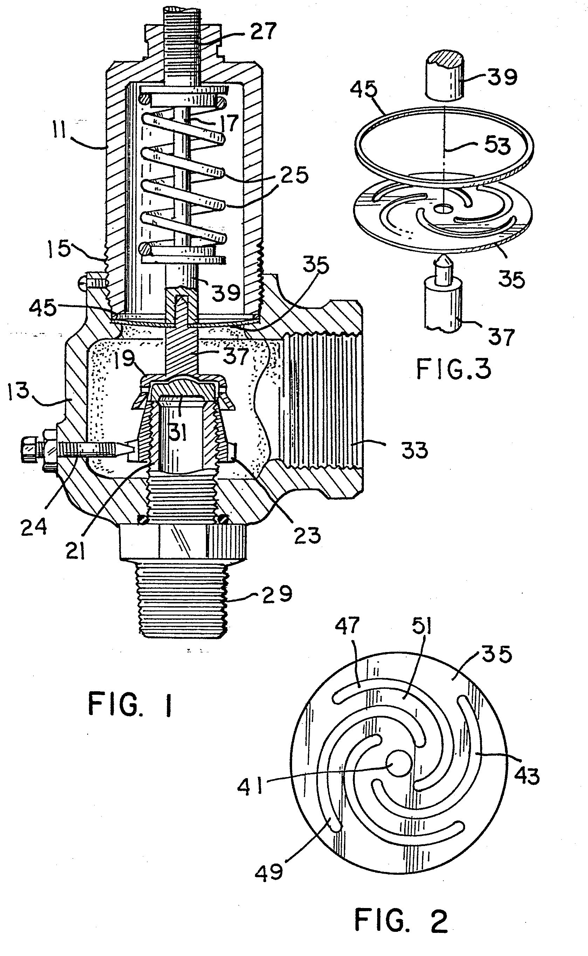

Figure 1 illustrates the valve stem guide of the present invention in one form in the exemplary environment of a pressure relief valve of a type currently marketed by the applicants.

Briefly, this known valve construction includes a first housing portion 11 and a second housing portion 13 threadedly joined at 15 along an axis generally coaxial with a valve stem or control rod 17. In the prior art pressure relief valve arrangement an inflexible disc having a central bushing was held captive between the housing portions 11 and 13 and a one-piece valve stem was slidably supported in that bushing. The valve stem supported valve member 19 is biased for engagement with the upper annular valve seat of nozzle 21. Nozzle 21 threadedly supports a control or regulator ring 23 which may be moved up or down nozzle 21 and then held in a desired position by screw 24 so as to set the reclose pressure of the valve. Valve member 19 is biased toward the seat of nozzle 21 by a coil spring 25 and the valve opening pressure which is intimately related to the stress of spring 25 may be controlled by adjusting the pressure adjusting screw 27. Thus, the pressure in a line connected to the threaded coupling 29 against the disc 31 of valve member 19 is monitored, and when that pressure exceeds the force of spring 25 urging the valve disc 31 against the valve seat, the valve opens venting that pressure by way of the outlet arrangement coupled to the threaded coupling 33.

Proper alignment of the annular seat of nozzle 21 and disc 31 of the valve member 19 is critical to ensure sealing of the valve and this proper alignment as well as the elimination of any sliding motion within a bushing of a valve guide is achieved in the present invention by the use of a flexible beam member 35.

In Figure 1, the valve stem is formed for example of a pair of threadedly joined coaxial stem portions 37 and 39 rather than as a one-piece stem in the prior art. Flexible beam 35 is seen to comprise a circular flexible valve member guide having a central portion close to the central opening 41 which is captive between the valve stem portions 37 and 39 when they are joined, and this circular disc has the outer peripheral portion thereof captive between the threaded housing portions 11 and 13. An annular washer 45 may be interposed between housing portion 11 and the guide 35 to hold the guide 35 in the proper position and prevent damage thereto during assembly. The valve member guide 35 is formed of a relatively thin circular sheet of spring material and has a plurality of volute slots such as 43, 47 and 49 having an angular extent sufficient to allow the desired flexing of the beam. In one specific embodiment these slots as seen in Figure 2 spiral through about 180° relative to the center of hole 41. These slots define a like plurality of volute or spiraling spokes or ribs such as 51 which interconnect the peripheral and central portions of the guide and as best seen in Figure 2 the angle traversed by each spoke in the illustrated embodiment is in excess of 90°. The valve guide 35 thus forms a flexible beam with one end, namely the central portion of the disc, fastened to the valve stem 37 and 39 and with the other end thereof, namely the outer peripheral portion fastened to the housing 11 and 13.

When the valve is closed, beam 35 is flexed somewhat downwardly as illustrated in Figure 1, and when the pressure in the line attached to fitting 29 exceeds the preset value, this pressure causes disc 31 to raise off the seat of nozzle 21 against the force of coil spring 25 and flexing the disc 35 through its neutral or a flat position and somewhat upwardly. Since rotation between the housing and the outer peripheral portion of disc 35 is prevented due to the clamping together of the housing portions 11 and 13 and since rotation between the valve stem 37 and 39 and the central portion of disc 35 is also prevented due to clamping together of those two valve stem portions about the central portion of disc 35, axial motion of the valve stem along axis 53 also induces a rotary motion of the valve stem and valve member 19. A point on the valve member 19 off axis 53 executes a nearly helical path or a trajectory which trajectory reverses its direction of rotation as the disc passes through its neutral or flat position. Such motion may be readily observed by drawing the disc 35 on a sheet of paper and cutting out the volute slots such as 43 and then moving the central portion of that paper disc relative to its

8

peripheral or outer portion and noting the rotation of the central portion relative to the outer portion as the paper disc is flexed.

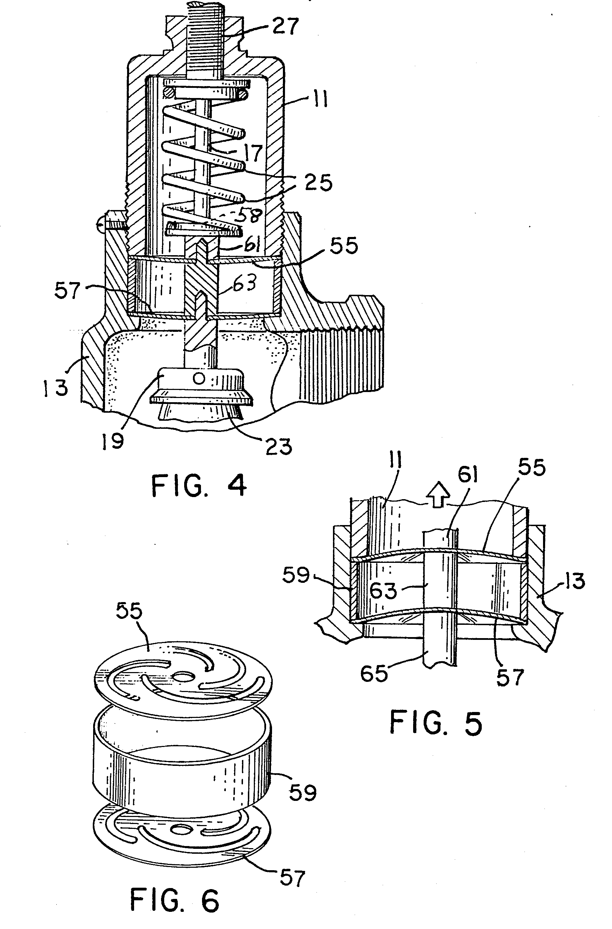

One variation on the valve stem guide of Figures 1, 2 and 3 is illustrated in Figures 4, 5 and 6 wherein analogous parts have like reference numerals. The variation of Figures 4, 5 and 6 might, for example, be used in larger valves to maintain proper alignment of the valve stem and assure that the valve passes through the same fixed trajectory each time it actuates or opens. The flexible beam means of Figures 4, 5 and 6 includes a pair of spaced relatively flat discs 55 and 57 with their respective central portions captive between threaded valve stem portions 61 and 63 and 63 and 65, respectively. The outer peripheral portions of the discs 55 and 57 are separated by a spacing sleeve 59 and fixed relative to the housing by clamping the two discs and spacer between the threaded housing portions 11 and 13 connection 58 between control rod 17 and portion 61 may be a conventional lost thread connection to allow limited pivoting. Thus, in this configuration each disc executes a like but displaced motion upon opening and closing of the valve. As before, flexure of this beam arrangement induces a rotary motion of the valve and stem.

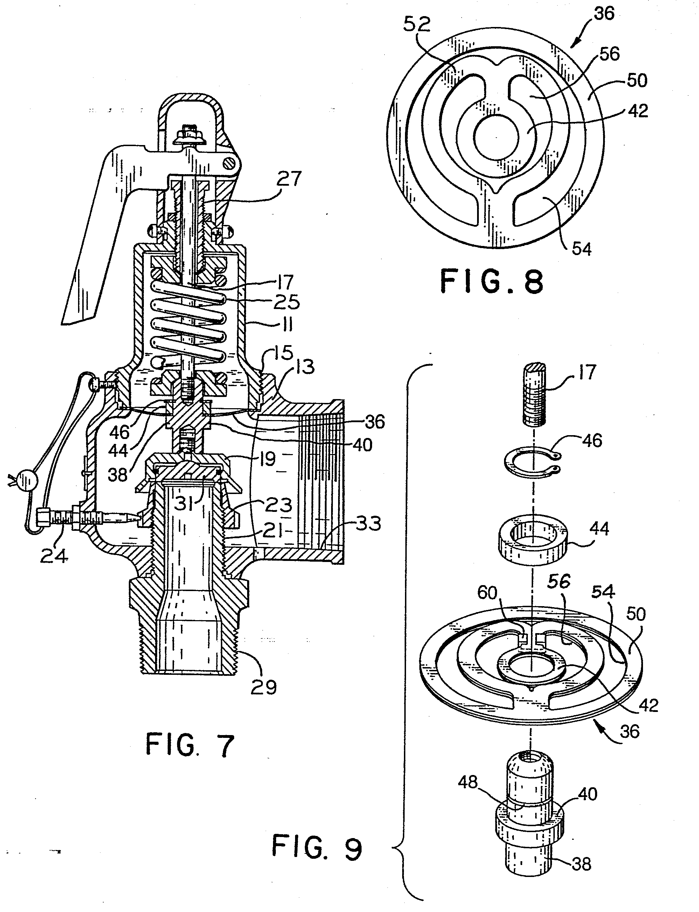

The flexible beam member 36 of Figures 7 and 8 is analogus to beam member 35 of Figures 1-3, however, in those figures beam member 35 and valve stem 37 were rigidly coupled together so that any rotational motion transmitted by way of shaft 17

0116738

during valve adjustment resulted in a torque being applied to the beam or beam member 35. A rotationally free coupling between the beam member 36 and valve stem 38 is achieved by the snap ring assembly process illustrated in Figures 7 and 9.

In Figure 7 valve stem 38 is seen to include a shoulder 40 so that the inner or central portion 42 of the disc or beam member 36 may be passed over the upper end of the valve stem and come to rest on shoulder 40. A bushing or sleeve 44 is then similarly slid down over the upper end of valve stem 38 and finally the C-shaped spring or snap ring 46 is spread and placed in slot 48 so as to capture the inner or central portion 42 of the beam between shoulder 40 and sleeve 44 as illustrated in Figure 7. In some cases shoulder 40 may comprise a similar snap ring arrangement and other variations are easily seen.

Flexible beam 36 is seen to comprise a circular flexible valve member guide having generally concentric inner and outer portions 42 and 50 with inner portion 42 coupled to valve stem 40 in an axially fixed but rotationally free manner while the outer or peripheral portion 50 is gripped between housing portions 11 and 13 with optionally an annular washer interposed between those housing portions to properly position the guide 36 as well as to prevent damage thereto during assembly. The valve member guide 36 is formed of a relatively thin circular sheet of spring material and has a pair of nested oppositely facing C-shaped cutout portions 54 and 56

0116738

. 10

leaving a somewhat cardioid shaped flexible interconnection 52 between central portion 42 and peripheral portion 50. This interconnection between the two portions has, as seen in Fig. 8, bilateral symmetry about a vertical line with the effective length of the arm 52 coupling portions 42 and 50 together being at least double and perhaps four or five times that which would be achieved by a bridging portion of metal directly interconnecting these two concentric portions. The valve guide 36 thus forms a flexible beam with one end, namely the central portion 42 of the disc, axially fixed to the valve stem 38 and with the other end thereof, namely, the peripheral portion 50, fastened to the housing 11 and 13.

When the valve is closed, beam 36 is flexed somewhat downwardly as illustrated in Figure 7, and when the pressure in the line attached to fitting 29 exceeds the preset value, this pressure causes disc 31 to raise off the seat of nozzle 21 against the force of coil spring 25 and flexing the disc 36 through its neutral or a flat position and somewhat upwardly. Since rotation between the housing and the outer peripheral portion of disc 36 is prevented due to the clamping together of the housing portions 11 and 13 while rotation between the valve stem 38 and the central portion 42 of disc 36 may freely occur the angular orientation of the disc 36 within the valve remains fixed while the beam flexes to allow opening and closing motion of the valve assuring accurate closing of the valve while not restricting the angular orientation thereof.

While the disc 36 of Fig. 9 has been described as being the same disc as illustrated in Figs. 7 and 8, Fig. 9 actually introduces a slight variation on the disc structure which may be employed when a comparatively thick disc or guide is desired without introducing excessive spring biasing effects associated therewith. Disk 36 of Fig. 9 is actually formed from two identical disks joined together for example by cleat 60, thus disc 36 of Fig. 9 is twice the thickness of a single disc and therefor has twice the spring force of a single disc. Were disc 36 to have been formed from the same type material but of a thickness double that of the earlier discussed discs, the spring forces associated with that thicker disc would be substantially greater than double. Thus, by stacking disks the relationship between spring force and thickness becomes nearly linear while simply employing thicker material results in a relationship between spring force and thickness where the force increases as the cube of thickness.

From the foregoing it is now apparent that a novel valve stem guide arrangement has been disclosed meeting the objects and advantageous features set out hereinbefore as well as others. Numerous modifications will readily suggest themselves to those of ordinary skill in the art. For example, features set forth in Figures 1-6 may be readily interchanged with features set forth in Figures 7-9 as desired for any particular valve design, the

12

spaced double guide member arrangement of cardoid shape being particularly desirable. These as well as other modifications as to the precise configurations, shapes and details may be made by those have ordinary skill in the art without departing from the spirit of the invention or the scope thereof as set out by the claims which follow.

0116738

13

WHAT IS CLAIMED IS:

1. In a pressure-relief valve of the type having first and second housing portions joinable along an axis, a nozzle having an annular valve seat at one end within the housing and aligned with the axis, a valve member for sealingly engaging the valve seat and having a stem extending along the axis away from the nozzle, and means biasing the valve member into engagement with the seat, the improvement wherein the stem includes a shoulder and further comprising a circular flexible valve member guide having a peripheral portion thereof captive between the housing portions and a central portion thereof axially captive adjacent the stem shoulder.

2. The improvement of Claim 1 wherein the valve member guide comprises a relatively thin circular sheet of spring material having a bilaterally symmetric arm extending between the central and peripheral portions.

3. The improvement of Claim 1 wherein the valve member guide comprises a relatively thin circular sheet of spring material with a pair of nested oppositely facing C-shaped cut out portions intermediate the central and peripheral portions thereof.

4. The improvement of Claim 1 further comprising a second circular flexible valve member guide having a central portion axially fixed to the stem and a peripheral portion captive between the housing portions.

5. The improvement of Claim 4 wherein the second circular flexible valve member guide and said circular flexible valve member guide are positioned immediately adjacent one another.

6. In a pressure relief valve having a valve member movable within a valve housing and spring biased toward a valve seat within the housing, an improved valve member guide for maintaining proper alignment of the valve member and valve seat comprising flexible beam means having generally concentric inner and outer portions with the outer portion fixed to the housing and the inner portion fastened to the member of the valve and with an arm portion interconnecting an inner edge segment of the outer concentric portion and a generally diametrically opposite outer section of the inner concentric portion wherein opening and closing of the valve is associated with flexure only of the beam means thereby eliminating sliding motion of the member relative to the guide and assuring accurate reseating of the valve member and valve seat.

7. The improvement of Claim 6 wherein the beam means is of one piece construction, the flexure of the beam means comprising primarily deformation of the arm portion.

8. The improvement of Claim 6 wherein the beam means comprises a relatively thin circular sheet of spring material having a bilaterally symmetric arm extending between the inner and outer portions.

9. The improvement of Claim 6 wherein the beam means comprises a relatively thin circular sheet of spring material with a pair of nested oppositely facing C-shaped cut out portions intermediate the inner and outer portions thereof.

10. In a pressure relief valve having a stem supported valve member movable within a valve housing and spring biased toward a valve seat within the housing, an improved valve stem guide for maintaining proper alignment of the valve member and valve seat comprising flexible arm means coupling a region of the stem to a region of the housing in a slide free manner while allowing limited movement of the valve member into and out of engagement with the valve seat, the arm having an effective length at least double the distance between the regions.

11. The improvement of Claim 10 wherein the coupling means is a generally flat circular disc having a central portion engaging the stem and a peripheral portion fastened to the housing.

12. The improvement of Claim 11 wherein the coupling means arm extends between an inner section of the peripheral portion and a generally diametrically opposite outer section of the central portion.

13. The improvement of Claim 6 wherein the valve member is stem supported and the flexible beam means is in the form of an arm coupling a region of the stem to a region of the housing in a slide free manner while allowing limited movement of the valve member into and out of engagement with the valve seat, the arm having an effective length at least double the distance between the regions.

14. The improvement of Claim 13 wherein the coupling means is a generally flat circular disc having a central portion engaging the stem and a peripheral portion fastened to the housing.

15. The improvement of Claim 14 wherein the coupling means arm extends between an inner section of the peripheral portion and a generally diametrically opposite outer section of the central portion.

16. The improvement of Claim 15 wherein the arm is generally configured as a cardiod.

17. The improvement of Claim 13 wherein the valve member guide comprises a relatively thin circular sheet of spring material having a bilaterally symmetric arm extending between the central and peripheral portions.

18. The improvement of Claim 13 wherein the valve member guide comprises a relatively thin circular sheet of spring material with a pair of nested oppositely facing C-shaped cut out portions intermediate the central and peripheral portions thereof.

19. In a pressure relief valve of the type having first and second housing portions threadedly joinable along an axis, a nozzle having an annular valve seat at one end within the housing and aligned with the axis, a valve member for sealingly engaging the valve seat and having a stem extending along the axis away from the nozzle, and means biasing the valve member into engagement with the seat, the improvement wherein the stem is formed of a pair of threadedly joined coaxial stem portions and further comprising a circular flexible valve member guide having a central portion thereof captive between the stem portions and a peripheral portion thereof captive between the housing portions.

20. The improvement of Claim 19 wherein the valve member guide comprises a relatively thin circular sheet of spring material having a plurality of slots.

21. ·The improvement of Claim 20 wherein the flexible beam means comprises a relatively thin circular sheet of spring material having a plurality of slots and with the circumference thereof comprising the one end fixed to the housing.

22. The improvement of Claim 21 wherein flexure of the valve member guide associated with·opening and closing of the valve induces a repeatable motion of the valve member.

23. The improvement of Claim 19 further comprising a second circular flexible valve member guide having a central portion fixed to the stem and spaced from the first mentioned guide central portion, and a sleeve for maintaining a like spaced separation between the peripheral portions of the guides.

24. The improvement of Claim 23 wherein the sleeve and guide peripheral portions are held captive adjacent one another between the threadedly joined housing portions.

25. In a pressure relief valve having a stem supported valve member movable within a valve housing and spring biased toward a valve seat within the housing, an improved valve stem guide for maintaining proper alignment of the valve member and valve seat comprising means coupling the stem to the housing in a slide-free manner while allowing limited movement of the valve member into and out of engagement with the valve seat along a fixed trajectory.

26. The improvement of Claim 25 wherein the coupling means is a generally flat circular disc having a central portion fastened to the stem and a peripheral portion fastened to the housing.

27. In a pressure relief valve of the type having first and second housing portions joinable along an axis, a nozzle having an annular valve seat at one end within the housing and aligned with the axis, a valve member for sealingly engaging the valve seat and having a stem extending along the axis away from the nozzle, and means biasing the valve member into engagement with the seat, the improvement wherein the stem includes a shoulder and further comprising a circular flexible valve member guide having a peripheral portion thereof captive between the housing portions and a central portion thereof axially captive adjacent the stem shoulder.

28. The improvement of Claim 27 wherein the valve member guide comprises a relatively thin circular sheet of spring material having a bilaterally symmetric arm extending between the central and peripheral portions.

29. The improvement of Claim 27 wherein the valve member guide comprises a relatively thin circular sheet of spring material with a pair of nested oppositely facing C-shaped cut out portions intermediate the central and peripheral portions thereof.

30. The improvement of Claim 27 further comprising a second circular flexible valve member guide having a central portion axially fixed to the stem and a peripheral portion captive between the housing portions.

31. The improvement of Claim 30 wherein the second circular flexible valve member guide and said circular flexible valve member guide are positioned immediately adjacent one another.

32. In a pressure relief valve having a valve member movable within a valve housing and spring biased toward a valve seat within the housing, an improved valve member guide for maintaining proper alignment of the valve member and valve seat comprising flexible beam means having generally concentric inner and outer portions with the outer portion fixed to the housing and the inner portion fastened to the member of the valve and with an arm portion interconnecting an inner edge segment of the outer concentric portion and a generally diametrically opposite outer section of the inner concentric portion wherein opening and closing of the valve is associated with flexure only of the beam means thereby eliminating sliding motion of the member relative to the guide and assuring accurate reseating of the valve member and valve seat.

33. The improvement of Claim 32 wherein the beam means is of one piece construction, the flexure of the beam means comprising primarily deformation of the arm portion.

34. The improvement of Claim 32 wherein the beam means comprises a relatively thin circular sheet of spring material having a bilaterally symmetric arm extending between the inner and outer portions.

35. The improvement of Claim 32 wherein the beam means comprises a relatively thin circular sheet of spring material with a pair of nested oppositely facing C-shaped cut out portions intermediate the inner and outer portions thereof.

1/3

FIG. 1

FIG.3

FIG. 2

**FIG. 4**

**FIG. 5**

**FIG. 6**

0116738

3/3

FIG. 8

FIG. 7

FIG. 9

European Patent
Office

**EUROPEAN SEARCH REPORT**

0116738

Application number

| | DOCUMENTS CONSIDERED TO BE RELEVANT | | EP 83303542.1 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | GB - A - 640 150 (TECALEMIT LMD AND CAMILLE CLARE SPRANKLING LE CLAIR)<br>* Totality * | 1-3 | F 16 K 1/32 |
| A | DE - B - 1 165 368 (KIMBRO MANU-FACTURING CORP.)<br>* Claims 1-6; fig. 1-5 * | 1,2,4 | |
| A | FR - A - 1 125 618 (M.L. JULIEN)<br>* Column 1, lines 29-35; fig. 1 * | 1,4 | |
| A | US - A - 2 704 548 (E.K. RALSTON)<br>* Fig. 1-4 * | 1,2 | |
| A | DE - B - 1 209 377 (DANFOSS VED. ING. M. CLAUSEN)<br>* Claims 1,5; fig. 1-4 * | 1,2 | **TECHNICAL FIELDS SEARCHED (Int. Cl. ³)**<br><br>F 16 K  1/00<br>F 16 K 15/00<br>F 16 K 17/00 |
| A | DE - A - 1 450 531 (HOERBIGER VENTILWERKE AG)<br>* Fig. 1-5 * | 1-3 | |
| A | EP - A1 - 0 032 346 (ELECTRICITE DE FRANCE)<br>* Page 7, lines 6-19; fig. 1 * | | |

The present search report has been drawn up for all claims

| Place of search | Date of completion of the search | Examiner |
|---|---|---|
| VIENNA | 22-12-1983 | ROUSSARIAN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent

Office

**EUROPEAN SEARCH REPORT**

EP 83303542.1

| DOCUMENTS CONSIDERED TO BE RELEVANT | | | CLASSIFICATION OF THE APPLICATION (Int. Cl.⁴) |
|---|---|---|---|
| Category | Citation of document with indication. where appropriate. of relevant passages | Relevant to claim | |
| A | GB - A - 1 493 762 (CONSOLIDATED VALVE INDUSTRIES INC.) <br><br> * Totality * <br><br> ---- | | |

TECHNICAL FIELDS SEARCHED (Int. Cl.³)

EPO Form 1503.2  06.78